(19) Europäisches Patentamt
European Patent Office
Office européen des brevets

(11) **EP 3 078 568 A1**

(12) **EUROPEAN PATENT APPLICATION**

(43) Date of publication:
**12.10.2016 Bulletin 2016/41**

(51) Int Cl.:
**B62D 1/184** *(2006.01)*    *B62D 1/187* *(2006.01)*

(21) Application number: **16163533.9**

(22) Date of filing: **01.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.04.2015   JP 2015078698**

(71) Applicant: **JTEKT Corporation**
**Chuo-ku, Osaka-shi**
**Osaka 542-8502 (JP)**

(72) Inventors:
• IMAGAKI, Susumu
  **Osaka-shi, Osaka 542-8502 (JP)**
• SAKUDA, Masayoshi
  **Osaka-shi, Osaka 542-8502 (JP)**
• OKANO, Ryota
  **Osaka-shi, Osaka 542-8502 (JP)**
• YAMAOKA, Michiaki
  **Osaka-shi, Osaka 542-8502 (JP)**

(74) Representative: **Winter, Brandl, Fürniss, Hübner,**
**Röss, Kaiser, Polte - Partnerschaft mbB**
**Patent- und Rechtsanwaltskanzlei**
**Alois-Steinecker-Strasse 22**
**85354 Freising (DE)**

(54) **STEERING SYSTEM**

(57)    A fulcrum formation member (80) forming a fulcrum and a first spring engagement portion (38) are provided in a bracket (17). A lever link (60) that swings about the fulcrum includes a second spring engagement portion (62) forming a point of load, and an elongated hole (63) in which a fastening shaft (21) is fitted so as to be movable in a longitudinal direction in association with tilt adjustment. A point of effort is located at the edge (63A) of the elongated hole (63). One end (71) of a spring member (70) (biasing member) engages with the first spring engagement portion (38), and the other end (72) thereof engages with the second spring engagement portion (62). The spring member (70) biases a column jacket (8) toward the upper side in a tilt direction via the lever link (60) and the fastening shaft (21).

FIG.2

EP 3 078 568 A1

**Description**

BACKGROUND OF THE INVENTION

1. Field of the Invention

The present invention relates to steering systems.

2. Description of the Related Art

A steering position adjustment device is proposed which supports a load such as a steering column and a steering wheel during tilt adjustment by a spring member interposed between a fixed bracket and a movable bracket (see, e.g., Japanese Patent Application Publication No. 2011-168190 (JP 2011-168190 A)). A tilt-telescopic steering system is also proposed in which a spring member is pulled in telescopic adjustment so as to restrain the impact on tilt adjustment (see, e.g., Japanese Patent Application Publication Nos. 2009-61993 (JP 2009-61993 A) and 2002-22061 (JP 2002-22061 A)). In JP 2009-61993 A and JP 2002-22061 A, the tilt-telescopic steering system includes a fixed bracket and a movable bracket which can be adjusted by tilt adjustment and telescopic adjustment, and a spring member is disposed between the fixed bracket and a member that is displaced in a tilt adjustment operation but is not moved in a telescopic adjustment operation.

When the steering wheel is adjusted to the uppermost position in the tilt direction by tilt adjustment, the spring member is minimally stretched and a spring load is reduced. On the other hand, when the steering wheel is adjusted to the lowermost position in the tilt direction by tilt adjustment, the spring member is maximally stretched and the spring load is increased. This is disadvantageous because the operation force that is applied by an operator to move the steering column toward the upper or lower side in the tilt direction varies significantly depending on the tilt adjustment position.

SUMMARY OF THE INVENTION

It is one object of the present invention to provide a steering system configured to restrain a change in operation force that is applied when changing a tilt adjustment position.

According to one aspect of the present invention, a steering system includes: a steering shaft having its one axial end coupled to a steering member; a column jacket that supports the steering shaft such that the steering shaft is rotatable and is swingable about a tilt center; a bracket that includes a pair of side plates each having an elongated tilt adjustment hole and that is fixed to a fixed portion; a fastening mechanism that includes a fastening shaft inserted through the elongated tilt adjustment holes of the bracket to move with the column jacket in a tilt direction, and that fastens the pair of side plates by the fastening shaft to lock a position of the column jacket; a fulcrum formation member provided on the fixed portion or the bracket and forming a fulcrum; a first engagement portion provided in the fixed portion or the bracket; a lever link that includes a second engagement portion forming a point of load, an elongated hole in which the fastening shaft is fitted so as to be movable in a longitudinal direction in association with tilt adjustment, and a point of effort located at an edge of the elongated hole directly or indirectly receiving the fastening shaft, and that is swingably supported by the fulcrum formation member; and a biasing member that includes one end engaged with the first engagement portion and the other end engaged with the second engagement portion and that biases the column jacket toward an upper side in the tilt direction via the lever link and the fastening shaft.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a partially cutaway schematic side view showing the schematic configuration of a steering system according to a first embodiment of the present invention;
FIG. 2 is a schematic exploded perspective view of the steering system of the first embodiment;
FIG. 3 is a sectional view of a main part of the steering system of the first embodiment, taken along line III-III in FIG. 1;
FIGS. 4A and 4B are schematic side views showing the structure around a biasing mechanism according to the first embodiment, where FIG. 4A shows the state where tilt adjustment has been made to the uppermost position in a tilt adjustment range, and FIG. 4B shows the state where tilt adjustment has been made to the lowermost position in the tilt adjustment range;

FIG. 5 is a schematic side view of the biasing mechanism according to the first embodiment;

FIG. 6 is a partially cutaway schematic side view showing the engagement structure between an elongated hole of a lever link and a boss portion surrounding a fastening shaft according to the first embodiment;

FIG. 7 is a schematic side view showing the structure around a biasing mechanism according to a second embodiment of the present invention;

FIG. 8A is a schematic side view showing the structure around a biasing mechanism according to a third embodiment of the present invention, and FIG. 8B is a plan view of a lever link; and

FIG. 9A is a schematic side view showing the structure around a biasing mechanism according to a fourth embodiment of the present invention, and FIG. 9B is a plan view of a lever link.

## DETAILED DESCRIPTION OF EMBODIMENTS

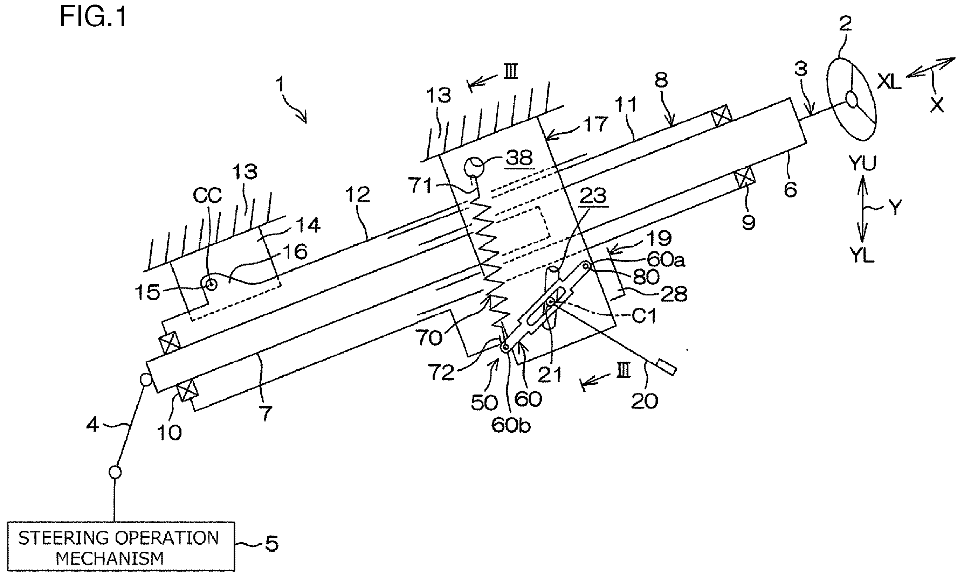

Embodiments of the present invention will be described below with reference to the accompanying drawings. FIG. 1 is a partially cutaway schematic side view showing the schematic configuration of a steering system according to a first embodiment of the present invention. Referring to FIG. 1, a steering system 1 includes a steering shaft 3 and a steering operation mechanism 5. A steering member 2 such as a steering wheel is coupled to one end (the upper end in the axial direction) of the steering shaft 3. The steering operation mechanism 5 is coupled to the steering shaft 3 via an intermediate shaft 4 etc.

The steering operation mechanism 5 is, e.g., a rack and pinion mechanism that steers steered wheels (not shown) in response to steering of the steering member 2. Rotation of the steering member 2 is transmitted to the steering operation mechanism 5 via the steering shaft 3, the intermediate shaft 4, etc. The rotation transmitted to the steering operation mechanism 5 is converted to axial movement of a rack shaft, not shown. The steered wheels are steered in this manner.

The steering shaft 3 has a tubular upper shaft 6 and a lower shaft 7. The upper shaft 6 is fitted to the lower shaft 7 by, e.g., spline fitting or serration fitting so as to be slidable relative to the lower shaft 7. The steering member 2 is coupled to one end of the upper shaft 6. The steering shaft 3 can be extended and retracted in an axial direction X. The steering system 1 further includes a hollow column jacket 8 that supports the steering shaft 3 such that the steering shaft 3 is rotatable. The steering shaft 3 is passed through the column jacket 8 and is rotatably supported by the column jacket 8 via a plurality of bearings 9, 10.

The column jacket 8 has an inner jacket 11 and an outer jacket 12. The inner jacket 11 is fitted to the outer jacket 12 so as to be slidable relative to the outer jacket 12. The inner jacket 11 is, for example, an upper jacket, and the outer jacket 12 is, for example, a lower jacket. The column jacket 8 can be extended and retracted in the axial direction X. The upper inner jacket 11 is coupled to the upper shaft 6 via the bearing 9 so as to be movable with the upper shaft 6 in the axial direction X. The lower outer jacket 12 supports the lower shaft 7 via the bearing 10 such that the lower shaft 7 is rotatable.

The steering system 1 further includes a fixed bracket 14, a tilt center shaft 15, and a column bracket 16. The fixed bracket 14 is fixed to a vehicle body 13. The tilt center shaft 15 is supported by the fixed bracket 14. The column bracket 16 is fixed to the outer periphery of the outer jacket 12 and is rotatably supported by the tilt center shaft 15. The column jacket 8 and the steering shaft 3 can pivot (tilt) in a tilt direction Y about a tilt center CC as the central axis of the tilt center shaft 15.

The position of the steering member 2 can be adjusted by pivoting (tilting) the steering shaft 3 and the column jacket 8 about the tilt center CC (what is called "tilt adjustment"). The position of the steering member 2 can also be adjusted by extending and retracting the steering shaft 3 and the column jacket 8 in the axial direction X (what is called "telescopic adjustment"). The steering system 1 further includes a bracket 17 and a fastening mechanism 18. The bracket 17 is fixed to the vehicle body 13. The fastening mechanism 18 attains a tilt lock and a telescopic lock. The bracket 17 includes a pair of side plates 22 each having an elongated tilt adjustment hole 23.

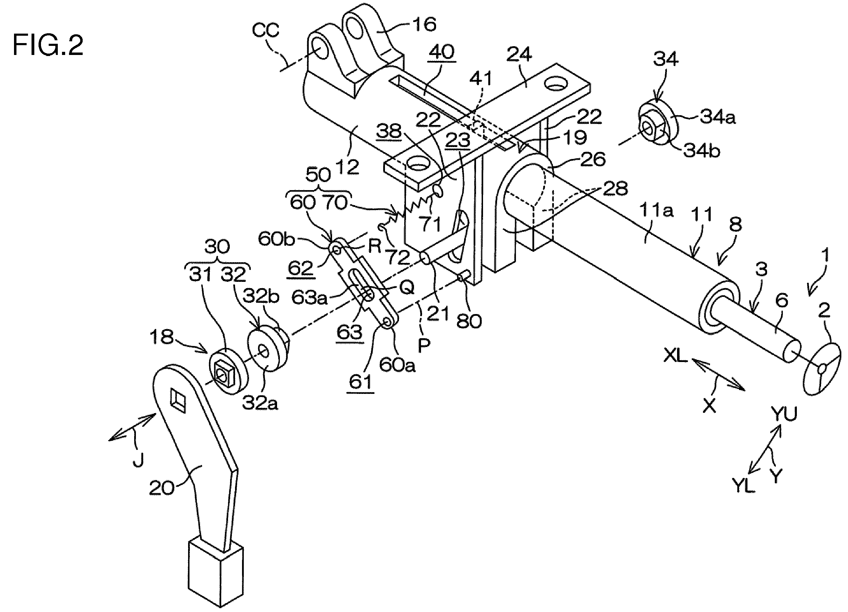

As shown in a schematic perspective view of FIG. 2, the outer jacket 12 includes a support portion 19 in its upper part in the axial direction X. The support portion 19 fastens the inner jacket 11 when it is elastically compressed to reduce its diameter. The support portion 19 includes an arc-shaped portion 26 and a pair of fastened portions 28. The arc-shaped portion 26 surrounds a part of an outer periphery 11a of the inner jacket 11. The pair of fastened portions 28 are extended from the arc-shaped portion 26 and face each other with a slit 27 interposed therebetween.

As shown in FIGS. 1 and 2, the fastening mechanism 18 includes an operation lever 20 and a fastening shaft 21. The operation lever 20 is an operation member that is operated to rotate by a driver. The fastening shaft 21 can rotate together with the operation lever 20. A central axis C1 of the fastening shaft 21 corresponds to the rotation center of the operation lever 20. As shown in FIG. 2, the fastening mechanism 18 includes a force conversion mechanism 30, a nut 33, the other fastening member 34, and an interposed member 35. The force conversion mechanism 30 includes a rotary cam 31 and a non-rotary cam (one fastening member 32).

Referring to FIG. 2, the fastening mechanism 18 attains a tilt lock by fastening the pair of side plates 22 of the bracket 17 to the pair of fastened portions 28 of the support portion 19 of the outer jacket 12 via the fastening shaft 21. The fastening mechanism 18 attains a telescopic lock by fastening the pair of fastened portions 28 of the support portion 19 of the outer jacket 12 by the pair of side plates 22 of the bracket 17 so as to reduce the diameter of the arc-shaped portion 26 and thus fastening the inner jacket 11 by the arc-shaped portion 26. The position of the column jacket 8 relative to the vehicle body 13 is thus fixed, so that the position of the steering member 2 is fixed.

The fastening shaft 21 is inserted through the elongated tilt adjustment holes 23 that are formed in the pair of side plates 22 of the bracket 17 so as to extend in the tilt direction Y (only one of the side plates 22 is shown in FIG. 1). As shown in FIG. 2, the outer jacket 12 has an elongated hole 40 extending in the axial direction X. The inner jacket 11 has an engagement portion 41 at its lower end in the axial direction X. The engagement portion 41 engages with the elongated hole 40. Engagement between the elongated hole 40 and the engagement portion 41 restricts rotation of the inner jacket 11 relative to the outer jacket 12. When making telescopic adjustment or absorbing impact, the engagement portion 41 is guided by the elongated hole 40 to move together with the inner jacket 11 toward a lower side XL in the axial direction X.

As shown in FIG. 1, the steering system 1 includes a biasing mechanism 50 that biases the column jacket 8 toward an upper side YU in the tilt direction Y via the fastening shaft 21. As shown in FIG. 2, a pair of such biasing mechanisms 50 are provided on the outer sides of the side plates 22 of the bracket 17. The pair of biasing mechanisms 50 are disposed to form a symmetrical configuration. The biasing mechanism 50 disposed on the outer side of one of the side plates 22 (the left side plate 22 in FIG. 2) will be described in the present embodiment.

As shown in FIGS. 1 and 2, the biasing mechanism 50 includes a lever link 60 and a spring member 70 as a biasing member. The spring member 70 is a helical extension spring having one end 71 and the other end 72. As shown in FIG. 2, the side plate 22 of the bracket 17 is provided with a fulcrum formation member 80 that forms a fulcrum P. The fulcrum formation member 80 is a pin-shaped shaft member fixed to the side plate 22. The central axis of the fulcrum formation member 80 is the fulcrum P.

As shown in FIGS. 1 and 2, the one end 71 and the other end 72 of the spring member 70 are formed in the shape of a hook. The side plate 22 of the bracket 17 has a first spring engagement portion 38 as a first engagement portion with which the one end 71 of the spring member 70 is engaged. The first spring engagement portion 38 is an engagement hole with which the one hook-shaped end 71 of the spring member 70 is hooked and engaged. The lever link 60 is formed by, e.g., an elongated plate and has one end 60a and the other end 60b. The lever link 60 is swingably supported at the one end 60a by the fulcrum formation member 80. Specifically, as shown in FIG. 2, the fulcrum formation member 80 is inserted through a circular insertion hole 61 formed in the one end 60a.

The lever link 60 has a second spring engagement portion 62, an elongated hole 63, and a point of effort Q. The second spring engagement portion 62 is a second engagement portion that forms a point of load R. The fastening shaft 21 is fittingly inserted through the elongated hole 63. The point of effort Q is located at an edge 63a of the elongated hole 63. The second spring engagement portion 62 is an engagement hole with which the other hook-shaped end 72 of the spring member 70 is hooked and engaged. The edge of the engagement hole (the second spring engagement portion 62) with which the other end 72 of the spring member 70 is engaged forms the point of load R.

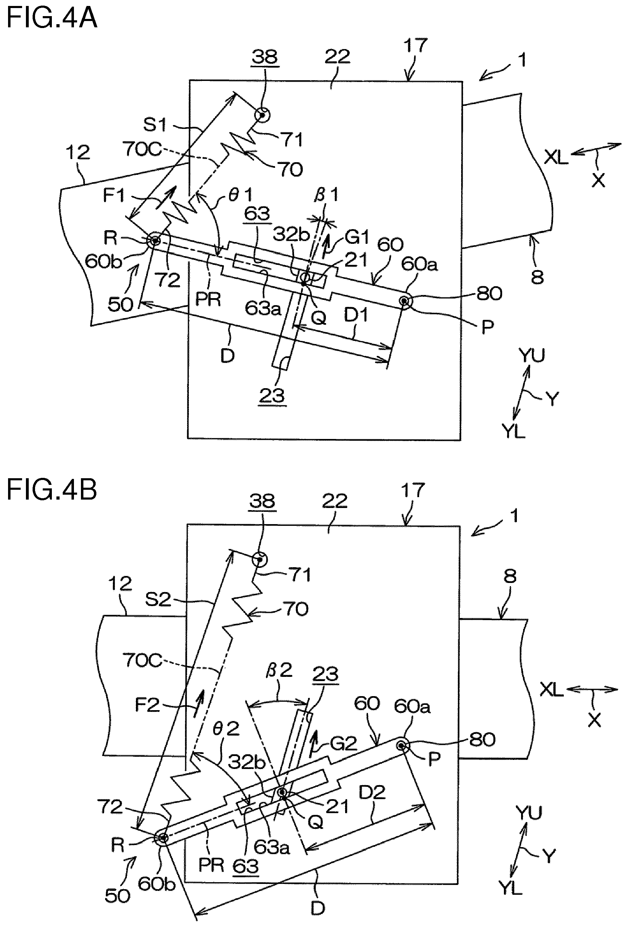

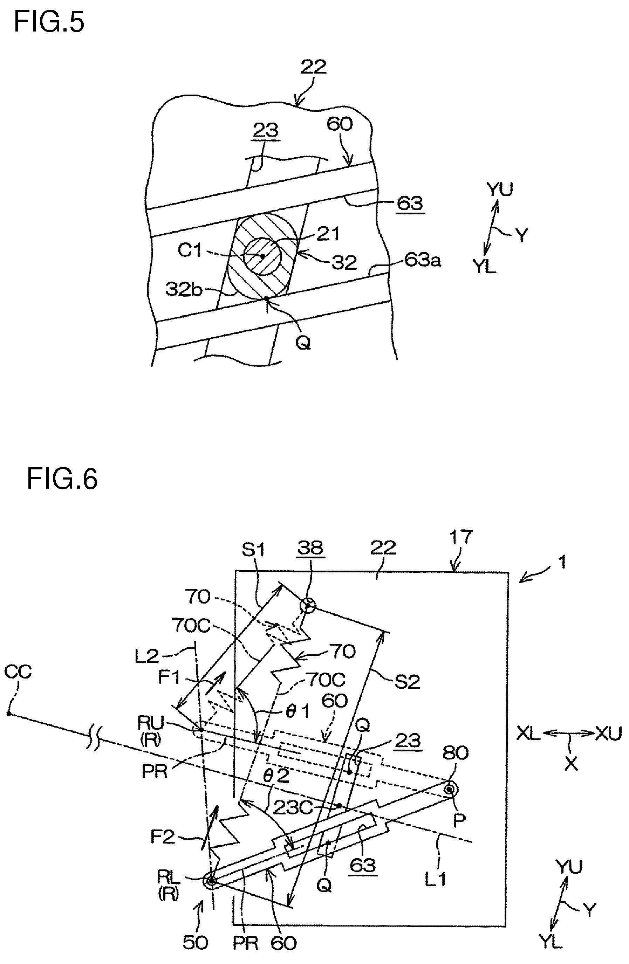

As shown in FIGS. 2 and 5, a boss portion 32b of the one fastening member 32 (the non-rotary cam) of the force conversion mechanism 30 is fitted on the outer periphery of the fastening shaft 21. As shown in FIG. 5, the point of effort Q is therefore located on the edge 63a on a lower side YL in the tilt direction Y of the elongated hole 63 which contacts the outer periphery of the boss portion 32b. As shown in FIGS. 4A and 4B, the fastening shaft 21 and the boss portion 32b can relatively move in the elongated hole 63 in the longitudinal direction of the elongated hole 63 in association with tilt adjustment.

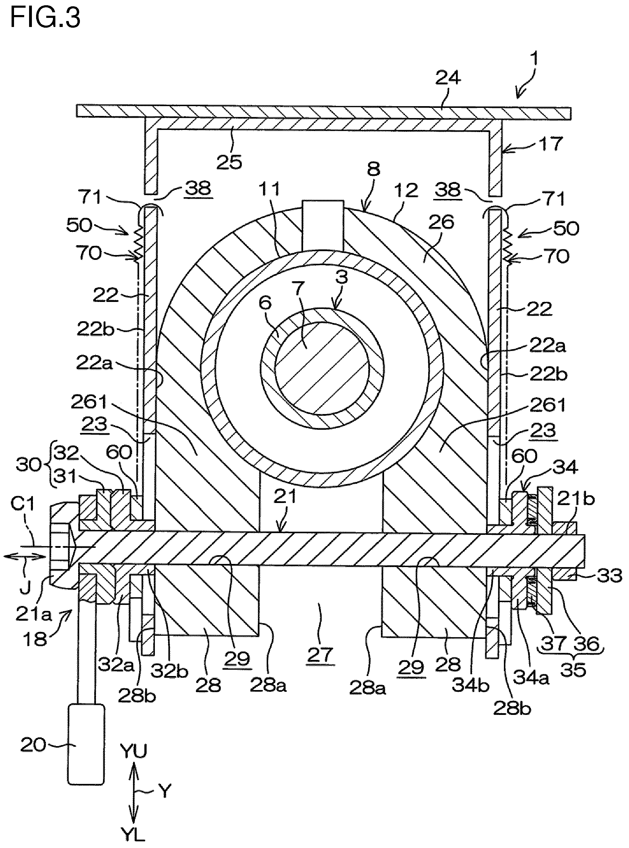

As shown in FIG. 1, the spring member 70 biases the column jacket 8 toward the upper side YU in the tilt direction Y via the lever link 60, the boss portion 32b, and the fastening shaft 21. FIG. 3 is a sectional view taken along line III-III in FIG. 1. As shown in FIG. 3, the bracket 17 includes an attachment plate 24, a top plate 25, and the pair of side plates 22. The attachment plate 24 is attached to the vehicle body 13. The top plate 25 is fixed to the attachment plate 24 so as to extend therealong. The pair of side plates 22 extend toward the lower side in the tilt direction Y from both ends of the top plate 25.

The present embodiment will be described with respect to an example in which the first spring engagement portion 38 is formed in the side plate 22. However, the first spring engagement portion 38 may be formed in the top plate 25 or the attachment plate 24. The pair of fastened portions 28 of the support portion 19 of the outer jacket 12 are extended from a pair of arc ends 261 of the arc-shaped portion 26. The pair of fastened portions 28 are placed between the pair of side plates 22 and are in the shape of a plate substantially parallel to the pair of side plates 22.

The slit 27 is formed between opposing inner side surfaces 28a of the pair of fastened portions 28. An inner surface 22a of each side plate 22 faces an outer surface 28b of a corresponding one of the fastened portions 28. Each fastened portion 28 of the outer jacket 12 has a circular fastening shaft insertion hole 29 through which the fastening shaft 21 is inserted. When making tilt adjustment, the fastening shaft 21, the outer jacket 12, the inner jacket 11, and the steering shaft 3 move together in the tilt direction Y.

The fastening shaft 21 is a bolt that is inserted through the elongated tilt adjustment holes 23 in the side plates 22 of the bracket 17 and the fastening shaft insertion holes 29 in the fastened portions 28 of the outer jacket 12. A large diameter head 21a at one end of the fastening shaft 21 is fixed such that the fastening shaft 21 can rotate together with the operation lever 20. The fastening mechanism 18 is interposed between the head 21a of the fastening shaft 21 and one of the side plates 22. The fastening mechanism 18 includes the force conversion mechanism 30 that converts operation torque of the operation lever 20 to an axial force of the fastening shaft 21 (a fastening force for fastening the pair of side plates 22).

The force conversion mechanism 30 includes the rotary cam 31 and the one fastening member 32. The rotary cam 31 is coupled to the operation lever 20 so as to be rotatable therewith, so that movement of the rotary cam 31 relative to the fastening shaft 21 in a fastening shaft direction J is restricted. The one fastening member 32 is a non-rotary cam that is cam-engaged with the rotary cam 31 and fastens one of the side plates 22. The fastening mechanism 18 further includes the nut 33, the other fastening member 34, and the interposed member 35. The nut 33 is screwed on a threaded portion 21b of the other end of the fastening shaft 21. The other fastening member 34 fastens the other side plate 22. The interposed member 35 is interposed between the other fastening member 34 and the nut 33.

The interposed member 35 includes a washer 36 and a needle roller bearing 37. The washer 36 is interposed between the nut 33 and the other fastening member 34. The needle roller bearing 37 is interposed between the washer 36 and the other fastening member 34. The other fastening member 34 and the interposed member 35 are interposed between the nut 33 and the other side plate 22 of the bracket 17. The rotary cam 31, the one fastening member 32 (the non-rotary cam), the other fastening member 34, and the interposed member 35 are supported by the outer periphery of the fastening shaft 21.

Each of the one fastening member 32 (the non-rotary cam) and the other fastening member 34 has a fastening plate portion 32a, 34a that fastens a corresponding one of the side plates 22, and a boss portion 32b, 34b that is fitted in a corresponding one of the elongated tilt adjustment holes 23. Since the boss portions 32b, 34b are fitted in the elongated tilt adjustment holes 23, rotation of the fastening members 32, 34 is restricted. The lever link 60 of a corresponding one of the biasing mechanisms 50 is interposed between the fastening plate portion 32a, 34a of the fastening member 32, 34 and an outer surface 22b of a corresponding one of the side plates 22 of the bracket 17.

The one fastening member 32 (the non-rotary cam) and the other fastening member 34 are supported by the fastening shaft 21 so as to be movable in the fastening shaft direction J. The rotary cam 31 rotates relative to the one fastening member 32 (the non-rotary cam) according to rotation of the operation lever 20 in a lock direction. The one fastening member 32 thus moves in the fastening shaft direction J, and the pair of side plates 22 of the bracket 17 are held and fastened between (the fastening plate portions 32a, 34a of) the fastening members 32, 34 via the lever links 60 of the pair of biasing mechanisms 50.

Each side plate 22 of the bracket 17 thus fastens a corresponding one of the fastened portions 28 of the support portion 19 of the outer jacket 12. This restricts movement of the outer jacket 12 in the tilt direction Y, whereby a tilt lock is attained. Since both of the fastened portions 28 are fastened, the arc-shaped portion 26 of the support portion 19 of the outer jacket 12 is elastically compressed to reduce its diameter, thereby fastening the inner jacket 11. This restricts movement of the inner jacket 11 in the axial direction X, whereby a telescopic lock is attained.

As the operation lever 20 is rotated in an unlock direction, the one fastening member 32 and the other fastening member 34 release the side plates 22 of the bracket 17. This allows the lever links 60 to move in the tilt direction Y together with the fastening shaft 21 and the members supported by the fastening shaft 21 (the fastening members 32, 34 etc.), so that tilt adjustment can be made. When making the tilt adjustment, the biasing mechanisms 50 operate so that the operation force of the operator does not change so much, regardless of the tilt adjustment position.

FIGS. 4A and 4B are schematic side views illustrating operation of the biasing mechanism 50. FIG. 4A shows the state where tilt adjustment has been made to the uppermost position in the tilt direction Y in a tilt adjustment range, and FIG. 4B shows the state where tilt adjustment has been made to the lowermost position in the tilt direction Y in the tilt adjustment range. As shown in FIG. 4A, in the biasing mechanism 50 using the lever link 60, the point of effort Q is located between the fulcrum P and the point of load R in the axial direction X.

As shown in a schematic view of FIG. 6, the fulcrum P (i.e., the fulcrum formation member 80) is located on the upper side YU of a first line L1 in the tilt direction Y, as viewed from the side. The first line L1 is the line connecting the tilt center CC and a middle position 23C in the tilt direction of the elongated tilt adjustment hole 23. This restrains a change in spring load of the spring member 70 in the tilt adjustment range, and thus can efficiently restrain a change in operation force during tilt adjustment.

As shown in FIG. 6, the first spring engagement portion 38 is placed at a position located on the fulcrum P side of a second line L2 and on the upper side YU of the point of load R (RU, RL) in the tilt direction Y, as viewed from the side. The second line L2 is the line passing through the position of the point of load R (RU in FIG. 6) in the state where tilt adjustment has been made to the uppermost position in the tilt direction Y in the tilt adjustment range and the position of the point of load R (RL in FIG. 6) in the state where tilt adjustment has been made to the lowermost position in the tilt direction Y in the tilt adjustment range.

As used herein, the angle of action θ1 refers to the angle between a line segment PR connecting the fulcrum P and the point of load R and an axis 70C of the spring member 70 in the state where the spring member 70 that is an extension spring is minimally stretched to a spring length S1 and generates the smallest biasing force F1. The angle of action θ2 refers to the angle between the line segment PR connecting the fulcrum P and the point of load R and the axis 70C of the spring member 70 in the state where the spring member 70 is maximally stretched to a spring length S2 and generates the largest biasing force F2. The angle of action θ1 that is a positive value is larger than the angle of action θ2 and smaller than 90° (0° < θ2 < θ1 < 90°).

The moment component of the smallest biasing force F1 is given by "F1 × sinθ1," and the moment component of the largest biasing force F2 is given by "F2 × sinθ2," where sinθ2 < sinθ1. A change in moment load due to stretching and compression of the spring member 70 in the tilt adjustment range can therefore be restrained. In FIG. 4A showing the state where tilt adjustment has been made to the uppermost position in the tilt adjustment range, "D" represents the distance between the fulcrum P and the point of load R, "G1" represents the force that moves the point of effort Q toward the upper side YU in the tilt direction Y by the moment applied to the point of effort Q due to the biasing force F1 of the spring member 70, "β1" represents the angle of action of the force G1, and "D1" represents the distance between the fulcrum P and the point of effort Q.

In FIG. 4B showing the state where tilt adjustment has been made to the lowermost position in the tilt adjustment range, "G2" represents the force that moves the point of effort Q toward the upper side YU in the tilt direction Y by the moment applied to the point of effort Q due to the biasing force F2 of the spring member 70, "β2" represents the angle of action of the force G2, and "D2" represents the distance between the fulcrum P and the point of effort Q. At the uppermost position in the tilt adjustment range, the operation force that is applied by the operator for the tilt adjustment corresponds to the force G1. At the lowermost position in the tilt adjustment range, the operation force that is applied by the operator for the tilt adjustment corresponds to the force G2. The ratio of the force G2 to the force G1, or G2/G1, is given by the following expression (1).

$$G2/G1 = (F2/F1) \times (\sin\theta2/\sin\theta1) \times (\cos\beta2/\cos\beta1) \times (D1/D2) \qquad \ldots (1)$$

If the biasing mechanism 50 including the lever link 60 is not used, the ratio G2/G1 is equal to the first term (F2/F1) of the above expression (1). In the present embodiment, the following conditions are set: 0° < θ2 < θ1 < 90°, 0° < β1 < β2 < 90°, and D1 < D2. Thus, the second term (sinθ2/sinθ1), the third term (cosβ2/cosβ1), and the fourth term (D1/D2) of the expression (1) are smaller than 1.

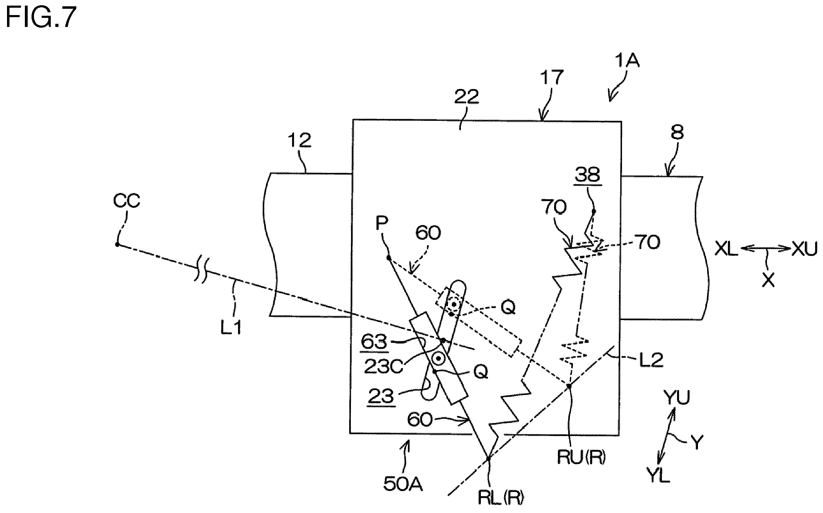

A change in operation force that is applied by the operator between the uppermost position and the lowermost position in the tilt adjustment range can therefore be reduced. The lever link 60 swings about the fulcrum P and is displaced about the fulcrum P in conjunction with tilt adjustment. As the lever link 60 swings about the fulcrum P, the position of the point of load R is shifted accordingly. The spring load (biasing force) of the spring member 70 therefore changes from the biasing force F1 to the biasing force F2. As the lever link 60 swings about the fulcrum P, the fastening shaft 21 and the elongated hole 63 move relative to each other, so that the distance between the fulcrum P and the point of effort Q changes from the distance D1 to the distance D2. The lever ratio of the lever link 60 changes from the ratio D1/D to the ratio D2/D accordingly. The change in spring load is thus offset by the change in lever ratio, whereby a change in operation force that is applied when changing the tilt adjustment position can be restrained. FIG. 7 is a schematic side view showing the structure around a biasing mechanism 50A of a steering system 1A according to a second embodiment of the present invention.

The biasing mechanism 50A of the second embodiment in FIG. 7 is different from the biasing mechanism 50 of the first embodiment in FIG. 6 in that the point of effort Q is located on the upper side XU of the fulcrum P in the axial direction X, and the point of load R is located on the upper side XU of the point of effort Q in the axial direction X. That is, the fulcrum P, the point of effort Q, and the point of load R of the biasing mechanism 50A are arranged reversely to those of the biasing mechanism 50 of the first embodiment in FIG. 1 in the axial direction X.

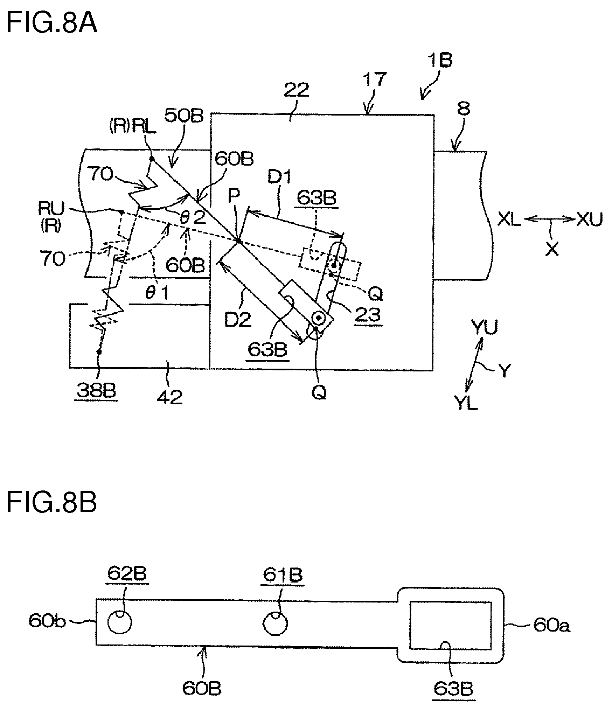

In the second embodiment in FIG. 7, the same components as those of the first embodiment in FIG. 6 are denoted with the same reference characters as those of the first embodiment in FIG. 6. The second embodiment has the same effects as those of the first embodiment. FIG. 8A is a schematic side view showing the structure around a biasing mechanism 50B of a steering system 1B according to a third embodiment of the present invention. FIG. 8B is a plan view of a lever link 60B of the biasing mechanism 50B.

In the third embodiment, the fulcrum P is located between the point of effort Q and the point of load R in the axial direction X. The point of effort Q is located on the upper side XU of the fulcrum P in the axial direction X. The point of load R is located on the lower side XL of the fulcrum P in the axial direction X. As shown in FIG. 8B, in the lever link 60B, an elongated hole 63B is therefore formed so as to extend from its one end 60a. A second spring engagement portion 62B that forms the point of load R is formed in the other end 60b. An insertion hole 61B through which a fulcrum formation member (not shown) forming the fulcrum P is inserted is formed between the elongated hole 63B and the second spring engagement portion 62B.

A first spring engagement portion 38B is formed in a stay 42 extended from the side plate 22. The first spring engagement portion 38B is located on the lower side YL of the point of load R (RU, RL) in the tilt direction Y. The third embodiment provides the same effects as those of the first embodiment by using a change in distance between the fulcrum P and the point of effort Q (D1 < D2) and a change in angle of action of the spring member 70 that is a helical extension spring ($\theta1 > \theta2$) at the time of tilt adjustment.

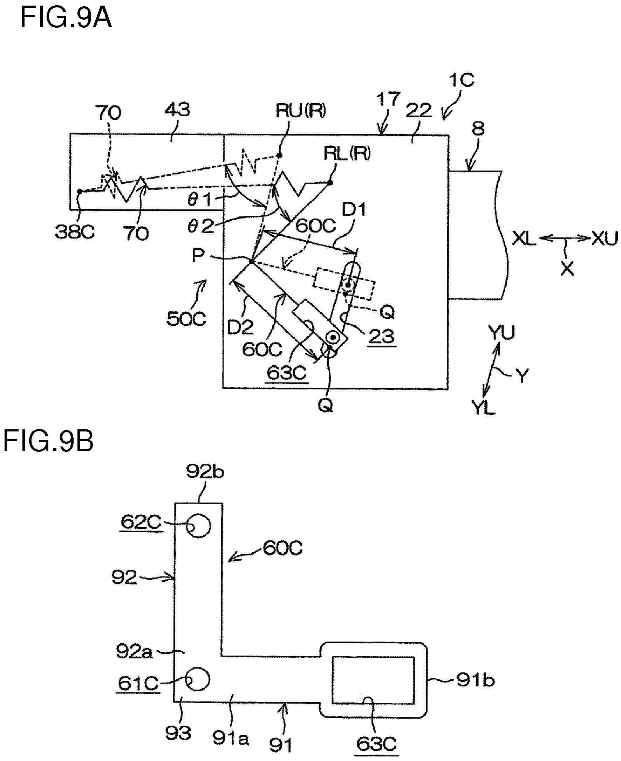

In the third embodiment, the point of effort Q and the point of load R in the biasing mechanism 50B may be arranged reversely with respect to the fulcrum P in the axial direction X. FIG. 9A is a schematic side view showing the structure around a biasing mechanism 50C of a steering system 1C according to a fourth embodiment of the present invention. FIG. 9B is a plan view of a lever link 60C of the biasing mechanism 50C.

As shown in FIG. 9A, a first spring engagement portion 38C is formed in a stay 43 extended from the side plate 22. The first spring engagement portion 38C is located on the lower side XL of the point of load R (RU, RL) in the axial direction X. As shown in FIG. 9B, the lever link 60C is a hook-shaped link including a first arm 91, a second arm 92, and a bent portion 93. The bent portion 93 connects base ends 91a, 92a of the first and second arms 91, 92.

An insertion hole 61C through which a fulcrum formation member (not shown) forming the fulcrum P is inserted is formed in the bent portion 93. The bent portion 93 is rotatably supported by the fulcrum formation member. An elongated hole 63C is formed in the lever link 60C so as to extend from a tip end 91b of the first arm 91 toward the bent portion 93. A second spring engagement portion 62C forming the point of load R is formed in a tip end 92b of the second arm 92.

The fourth embodiment provides the same effects as those of the first embodiment by using a change in distance between the fulcrum P and the point of effort Q (D1 < D2) and a change in angle of action of the spring member 70 that is a helical extension spring ($\theta1 > \theta2$) at the time of tilt adjustment. The use of the lever link 60C bent into the hook shape improves flexibility in placement of the spring member 70. In the fourth embodiment, the point of effort Q and the point of load R in the biasing mechanism 50C may be arranged reversely with respect to the fulcrum P in the axial direction X.

The present invention is not limited to the above embodiments. For example, the present invention is also applicable to such steering systems that the pair of side plates 22 of the bracket 17 fasten and fix a pair of fastened side plates of an inner bracket having an elongated telescopic adjustment hole and fixed to the upper jacket. In this case, the lever link may be placed between the side plate 22 and the fastened side plate.

In each of the above embodiments, either a pair of biasing mechanisms 50, 50A-50C may be provided, or a single biasing mechanism 50, 50A to 50C may be provided on one of the side plates 22. The first spring engagement portion 38, 38C may be provided in a fixed portion such as the vehicle body 13. Various modifications can be made to the present invention without departing from the spirit and scope of the present invention.

**Claims**

1. A steering system, comprising:

   a steering shaft having its one axial end coupled to a steering member;
   a column jacket that supports the steering shaft such that the steering shaft is rotatable and is swingable about a tilt center;
   a bracket that includes a pair of side plates each having an elongated tilt adjustment hole and that is fixed to a fixed portion;
   a fastening mechanism that includes a fastening shaft inserted through the elongated tilt adjustment holes of the bracket to move with the column jacket in a tilt direction, and that fastens the pair of side plates by the fastening shaft to lock a position of the column jacket;
   a fulcrum formation member provided on the fixed portion or the bracket and forming a fulcrum;
   a first engagement portion provided in the fixed portion or the bracket;
   a lever link that includes a second engagement portion forming a point of load, an elongated hole in which the fastening shaft is fitted so as to be movable in a longitudinal direction in association with tilt adjustment, and a point of effort located at an edge of the elongated hole directly or indirectly receiving the fastening shaft, and that is swingably supported by the fulcrum formation member; and
   a biasing member that includes one end engaged with the first engagement portion and the other end engaged with the second engagement portion and that biases the column jacket toward an upper side in the tilt direction via the lever link and the fastening shaft.

2. The steering system according to claim 1, wherein the point of effort is located between the fulcrum and the point of load in an axial direction.

**3.** The steering system according to claim 2, wherein
the fulcrum is located on the upper side of a first line in the tilt direction as viewed from a side, the first line being a line connecting the tilt center and a middle position in the tilt direction of the elongated tilt adjustment hole.

**4.** The steering system according to claim 3, wherein
the biasing member is an extension spring, and
the first engagement portion is placed at a position located on the fulcrum side of a second line and on the upper side of the point of load in the tilt direction as viewed from the side, the second line being a line passing through a position of the point of load in a state where tilt adjustment has been made to an uppermost position in the tilt direction in a tilt adjustment range and a position of the point of load in a state where the tilt adjustment has been made to a lowermost position in the tilt direction in the tilt adjustment range.

**5.** The steering system according to claim 1, wherein
the fulcrum is located between the point of effort and the point of load in the axial direction.

**6.** The steering system according to claim 1, wherein
the lever link includes a hook-shaped link including a first arm, a second arm, and a bent portion connecting base ends of the first and second arms,
the bent portion is rotatably supported by the fulcrum formation member,
the elongated hole is formed to extend from a tip end of the first arm toward the bent portion, and
the second engagement portion is provided in a tip end of the second arm.

FIG.1

STEERING OPERATION MECHANISM

FIG.2

EP 3 078 568 A1

# FIG.3

## FIG.4A

## FIG.4B

FIG.5

FIG.6

FIG.7

EP 3 078 568 A1

## FIG.8A

## FIG.8B

**FIG.9A**

**FIG.9B**

Europäisches
Patentamt

European
Patent Office

Office européen
des brevets

# EUROPEAN SEARCH REPORT

Application Number

EP 16 16 3533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/175335 A1 (TAKEZAWA NAOYUKI [JP] ET AL) 21 July 2011 (2011-07-21) * paragraphs [0039], [0059]; figures 1A-13C * | 1-6 | INV. B62D1/184 ADD. B62D1/187 |
| X,D | JP 2009 061993 A (YAMADA SEISAKUSHO KK) 26 March 2009 (2009-03-26) * paragraphs [0020] - [0025]; figures 1-10 * | 1-6 | |
| A | EP 1 992 544 A2 (NSK LTD [JP]) 19 November 2008 (2008-11-19) * paragraph [0038]; figures 1-11 * | 1 | |
| A | EP 1 093 990 A2 (DELPHI TECH INC [US]) 25 April 2001 (2001-04-25) * paragraph [0017]; figures 1,2 * | 1 | |
| A | US 2014/196564 A1 (BANG GWI SIK [KR] ET AL) 17 July 2014 (2014-07-17) * figure 6 * | 1 | |

TECHNICAL FIELDS
SEARCHED      (IPC)

B62D

The present search report has been drawn up for all claims

| Place of search | Date of completion of the search | Examiner |
|---|---|---|
| The Hague | 2 September 2016 | Molina Encabo, Aitor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 3533

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2016

| Patent document cited in search report | | Publication date | Patent family member(s) | | Publication date |
|---|---|---|---|---|---|
| US 2011175335 | A1 | 21-07-2011 | CN | 102126516 A | 20-07-2011 |
| | | | JP | 5662115 B2 | 28-01-2015 |
| | | | JP | 2011168265 A | 01-09-2011 |
| | | | US | 2011175335 A1 | 21-07-2011 |
| JP 2009061993 | A | 26-03-2009 | JP | 4694546 B2 | 08-06-2011 |
| | | | JP | 2009061993 A | 26-03-2009 |
| EP 1992544 | A2 | 19-11-2008 | EP | 1992544 A2 | 19-11-2008 |
| | | | JP | 5092880 B2 | 05-12-2012 |
| | | | JP | 2008308156 A | 25-12-2008 |
| | | | US | 2008284150 A1 | 20-11-2008 |
| EP 1093990 | A2 | 25-04-2001 | EP | 1093990 A2 | 25-04-2001 |
| | | | US | 6419269 B1 | 16-07-2002 |
| | | | US | 2003057694 A1 | 27-03-2003 |
| US 2014196564 | A1 | 17-07-2014 | CN | 103921832 A | 16-07-2014 |
| | | | DE | 102014000534 A1 | 17-07-2014 |
| | | | US | 2014196564 A1 | 17-07-2014 |

EPO FORM P0459

For more details about this annex : see Official Journal of the European Patent Office, No. 12/82

**EP 3 078 568 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011168190 A
- JP 2009061993 A
- JP 2002022061 A